# EUROPÄISCHE PATENTSCHRIFT

(11) **EP 3 375 088 B1**
(45) Veröffentlichungstag und Bekanntmachung des Hinweises auf die Patenterteilung: **08.05.2024**
(21) Anmeldenummer: 16819463.7
(22) Anmeldetag: 12.12.2016
(51) Int. Cl.: H02P 29/032

(54) **ELEKTROMOTORISCHER ANTRIEB FÜR EINEN ROBOTER UND VERFAHREN ZUM BETREIBEN EINES ANTRIEBSMOTORS EINES ROBOTERARMS**
ELECTRIC MOTOR DRIVE FOR A ROBOT AND METHOD FOR OPERATING A DRIVE MOTOR OF A ROBOT ARM
ENTRAÎNEMENT À MOTEUR ÉLECTRIQUE POUR UN ROBOT ET PROCÉDÉ DE FONCTIONNEMENT D'UN MOTEUR D'ENTRAÎNEMENT D'UN BRAS DE ROBOT

(30) Priorität: 22.12.2015 DE 102015122638
(43) Veröffentlichungstag der Anmeldung: 19.09.2018
(73) Patentinhaber: Schneider Electric Industries SAS, 92500 Rueil-Malmaison (FR)
(72) Erfinder: HOMBACH, Christian, 97261 Güntersleben (DE); BOETTCHER, Felix, 97855 Triefenstein (DE)
(74) Vertreter: Manitz Finsterwald Patent- und Rechtsanwaltspartnerschaft mbB
(86) Internationale Anmeldenummer: PCT/EP2016/080605
(87) Internationale Veröffentlichungsnummer: WO 2017/108472

(56) Entgegenhaltungen:
- EP-A1- 2 090 407
- EP-A1- 2 905 246
- DE-A1-102009 020 116

## Beschreibung

Die vorliegende Erfindung betrifft einen elektromotorischen Antrieb für einen Roboter und ein Verfahren zum Betreiben eines Antriebsmotors eines Roboterarms.

Bekannte Antriebsmotoren von Roboterarmen sind oftmals mit einer Drehmomentbegrenzung ausgestattet, welche das zulässige vom Antriebsmotor aufgebrachte Drehmoment begrenzt. Mit anderen Worten ist der Antriebsmotor so gesteuert, dass der Antriebsmotor maximal ein zuvor festgelegtes Drehmoment aufbringen kann. Dieses zuvor festgelegte maximale Drehmoment wird so gewählt, dass bei statischer Belastung eines Antriebsstrangs mit diesem Drehmoment, d.h. der Antriebsstrang wird im Stillstand mit dem Drehmoment belastet, kein Schaden an diesem Antriebsstrang erzeugt wird.

Bekannte Antriebsmotoren von Roboterarmen haben den Nachteil, dass während einer Beschleunigung des Antriebsstrangs aufgrund von Verlusten nicht das gesamte maximal mögliche Drehmoment an einem motorfernen Ende des Antriebsstrangs bereitgestellt wird. In einer Beschleunigungsphase des Antriebsstrangs liegt somit vielmehr ein geringeres Drehmoment als das maximal mögliche Drehmoment am motorfernen Ende des Antriebsstrangs an.

EP 2 090 407 A1 offenbart ein Verfahren zum Betreiben eines Roboterarms mit Schritt (B) von Anspruch 1 und einen elektromotorischen Antrieb gemäß dem Oberbegriff des Anspruchs 7. DE 10 2009 020 116 A1 betrifft eine Steuerungseinrichtung für einen Akkuschrauber. EP 2 905 246 A1 betrifft eine Steuerung für eine Umroll-Maschine.

Es ist eine Aufgabe der vorliegenden Erfindung, einen elektromotorischen Antrieb für einen Roboter und ein Verfahren zum Betreiben eines solchen dahingehend zu verbessern, dass dessen Effizienz gesteigert ist.

Die Aufgabe wird gelöst durch die Merkmale der unabhängigen Ansprüche.

Insbesondere wird die Aufgabe gelöst durch ein Verfahren zum Betreiben eines Antriebsmotors eines Roboterarms, umfassend die Schritte:
(A) Definieren eines maximal zulässigen Drehmomentsollwerts Tₛₜₐₜ eines anzutreibenden, motorfernen Antriebselements,
(B) Ermitteln eines Betrags eines durch Trägheits- und/oder sonstige Verluste verursachten Verlustdrehmoments Tₗₒₛₛ des Antriebsstrangs,
(C) Ermitteln eines neuen maximal zulässigen Drehmoments T_{dyn} durch ein Erhöhen des maximal zulässigen Drehmomentsollwerts Tₛₜₐₜ in Abhängigkeit von dem Betrag des Verlustdrehmoments Tₗₒₛₛ, und
(D) Beschleunigen des Antriebsmotors mit einem durch das neue maximal zulässige Drehmoment T_{dyn} begrenzten dynamischen Drehmoment Tₜₒₜₐₗ.

Das maximal zulässige Drehmoment T_{dyn} wird somit nicht unabhängig von den erzeugten Antriebsverlusten bestimmt, sondern ändert sich abhängig von einem zu ermittelnden durch Antriebsverluste verursachten Verlustdrehmoment Tₗₒₛₛ. Antriebsverluste können beispielsweise Verluste durch Reibung im Getriebe und/oder Trägheitsverluste sein. Das maximal zulässige Drehmoment T_{dyn} wird je nach ermitteltem Verlustdrehmoment Tₗₒₛₛ angepasst, sodass am motorfernen Ende des Antriebsstrangs tatsächlich das im Wesentlichen maximal zulässige Drehmoment Tₛₜₐₜ bereitgestellt werden kann. Hierdurch werden beispielsweise Fahrzeiten eines Pick & Place Roboters erheblich verringert und somit die Effizienz des Roboters unter Erhaltung des Schutzes der mechanischen Komponenten gesteigert.

Vorteilhafte Ausbildungen der Erfindung sind den Unteransprüchen, der Beschreibung und den Zeichnungen zu entnehmen.

Gemäß einer vorteilhaften Ausführungsform können die Drehmomentverluste Tₗₒₛₛ, insbesondere die des Motors und eines dem Motor optional zugeordneten Getriebes, berechnet werden. Beispielsweise kann eine solche Berechnung mit den folgenden Schritten durchgeführt werden:
(A') Hinterlegen eines Trägheitsmoments I_{MG} der im Antriebsstrang bewegten Teile,
(B') Ermitteln der Beschleunigung a_{MG} des Antriebsstrangs,
(C') Berechnen des Betrags des durch Trägheitsverluste verursachten Verlustdrehmoments Tₗₒₛₛ des Antriebsstrangs durch Multiplikation des Trägheitsmoments I_{MG} des Antriebsstrangs mit der ermittelten Beschleunigung a_{MG} des Antriebsstrangs.

Gemäß dieser beispielhaften Ausführungsform kann auf zuverlässige Art und Weise das durch Trägheitsverluste verursachte Verlustdrehmoment Tₗₒₛₛ des Antriebsstrangs berechnet werden.

Zur kontinuierlichen Bereitstellung eines maximal zulässigen dynamischen Drehmoments Tₛₜₐₜ am Antriebselement kann die Ermittlung des dynamischen Drehmoments T_{dyn} in zeitlichen Abständen wiederholt werden. Dabei können durch die Schritte:
(E) Ermitteln eines Betrags eines durch Trägheits- und/oder sonstigen Verlusten verursachten neuen Verlustdrehmoments T_{loss,neu} des Antriebsstrangs,
(F) Ermitteln eines neuen maximal zulässigen Drehmoments T_{dyn,neu} durch ein Erhöhen des maximal zulässigen Drehmomentsollwerts Tₛₜₐₜ in Abhängigkeit von dem Betrag des Verlustdrehmoments T_{loss,neu}, und
(G) Beschleunigen des Motors mit einem durch das neue maximal zulässige Drehmoment T_{dyn,neu} begrenzten dynamischen Drehmoment Tₜₒ₋tal,neu
verschiedene von der aktuellen Beschleunigung des Antriebsstrangs abhängige Drehmomente T_{dyn,neu} ermittelt werden, anhand derer der Motor geregelt wird. Hierdurch kann das von dem Motor erzeugte Drehmoment über einen gesamten Beschleunigungsvorgang immer so geregelt werden, dass am motorfernen Ende des Antriebsstrangs, d.h. am Antriebselement, ein konstantes maximal zulässiges Drehmoment Tₛₜₐₜ bereitgestellt werden kann.

Das neue Verlustdrehmoment T_{loss,neu} kann ebenfalls durch Berechnung ermittelt werden. Hierzu kann durch die folgenden Schritte:
(D') Ermitteln einer neuen Beschleunigung a_{MG,neu} des Antriebsstrangs,
(E') Berechnen des Betrags des neuen Verlustdrehmoments T_{loss,neu} des Antriebsstrangs durch Multiplikation des Trägheitsmoments I_{MG} des Antriebsstrangs mit der ermittelten neuen Beschleunigung a_{MG,neu} des Antriebsstrangs
zuerst eine durch das dynamische Drehmoment T_{total,neu} erzeugte Beschleunigung a_{MG,neu} des Antriebsstrangs ermittelt werden und dann durch Multiplikation mit dem Trägheitsmoment I_{MG} des Antriebsstrangs das neue Verlustdrehmoment T_{loss,neu} berechnet werden.

Gemäß einer bevorzugten Ausführungsform ist der Motor als Elektromotor, insbesondere als Servo-Elektromotor, ausgebildet und das Beschleunigen des Motors mit dem neuen maximal zulässigen Drehmoment T_{dyn} wird durch ein Erhöhen einer am Motor bereitgestellten abhängig vom Verlustdrehmoment Tₗₒₛₛ bestimmten Stromstärke bewirkt. Es versteht sich, dass auch alle weiteren Beschleunigungsvorgänge des Motors mit den jeweils ermittelten neuen maximal zulässigen Drehmomenten T_{dyn,neu} bis T_{dyn,neuN} durch ein Verändern der am Motor bereitgestellten Stromstärke bewirkt werden können.

Um eine möglichst präzise Steuerung und/oder Regelung zu erzeugen, kann das Ermitteln oder Berechnen des neuen maximal zulässigen Drehmoments T_{dyn,neu} in Echtzeit vorgenommen werden. Es versteht sich, dass mit dem neuen maximal zulässigen Drehmoment auch T_{dyn,neuN} gemeint sein kann. Eine Steuerung und/oder Regelung in Echtzeit kann beispielsweise bedeuten, dass jede Millisekunde neue Werte ermittelt werden.

Während das zuvor beschriebene Verfahren in erster Linie für eine positive Beschleunigung, d.h. eine Geschwindigkeitszunahme, beschrieben ist, kann das Verfahren auch genauso bei einer negativen Beschleunigung, d.h. einer Geschwindigkeitsabnahme, des Antriebsstrangs eingesetzt werden.

Ferner wird die Aufgabe durch einen elektromotorischen Antrieb eingerichtet für einen Roboter gelöst, welcher dazu ausgebildet ist, das zuvor beschriebene Verfahren durchzuführen.

Hierzu weist der elektromotorische Antrieb einen Antriebsstrang auf, der mit einem mit einem maximal zulässigen Drehmoment Tₛₜₐₜ antreibbaren Antriebselement ausgestattet ist. Der elektromotorische Antrieb weist zudem eine Regelungseinrichtung auf, welche mit einer Verlustdrehmomentermittlungseinrichtung eingerichtet zum Ermitteln eines durch Trägheitsverluste verursachten Verlustdrehmoments Tₗₒₛₛ des Antriebsstrangs und einer Steuerungseinrichtung eingerichtet zum Verändern des zulässigen Drehmomentsollwerts T_{dyn} in Abhängigkeit von dem Verlustdrehmoment Tₗₒₛₛ über das maximal zulässige Drehmoment Tₛₜₐₜ hinaus ausgestattet ist.

Gemäß einer bevorzugten Ausführungsform umfasst die Verlustdrehmomentermittlungseinrichtung eine direkte oder indirekte Beschleunigungsmesseinrichtung.

Hierdurch kann die Beschleunigung a_{MG} und/oder a_{MG,neu} des Antriebsstrangs ermittelt werden.

Beispielsweise kann die Beschleunigungsmesseinrichtung als Winkelbeschleunigungsmesseinrichtung ausgebildet sein. Hierdurch ist die Beschleunigung von rotierenden Teilen besonders einfach ermittelbar.

Alternativ oder zusätzlich kann die Verlustdrehmomentermittlungseinrichtung eine Geschwindigkeitsmesseinrichtung umfassen und mit Hilfe einer Messung mehrerer Geschwindigkeitswerte durch die Veränderung dieser Geschwindigkeitswerte die Beschleunigung ermitteln.

In einer weiteren Ausführungsform kann die Verlustdrehmomentermittlungseinrichtung eine Positionsmesseinrichtung umfassen und mit Hilfe einer Messung mehrerer Positionswerte durch die Veränderung dieser Positionswerte die Beschleunigung ermitteln. Dabei kann in einem Zwischenschritt durch die zeitliche Veränderung der Positionswerte eine Geschwindigkeit ermittelt werden.

Um das durch Trägheits- und/oder sonstige Verluste verursachte Verlustdrehmoment Tₗₒₛₛ des Antriebsstrangs berechnen zu können, umfasst die Regelungseinrichtung vorzugsweise eine Speichereinheit, in der ein Trägheitsmoment I_{MG} des Antriebsstrangs und/oder Werte von Reibungsverlusten bei bestimmten Betriebsmodi abgespeichert ist oder sind.

Der Antriebsstrang kann einen Antriebsmotor und ein Getriebe umfassen, wobei der Antriebsmotor in diesem Fall ein Trägheitsmoment I_{M} und das Getriebe ein Trägheitsmoment I_{G} aufweist. Diese Trägheitsmomente I_{M} und I_{G} können entweder einzeln in der Speichereinheit gespeichert sein oder als Summe I_{MG}.

Das Getriebe ist vorzugsweise als Stirnradgetriebe ausgebildet, kann aber auch als jede andere Art von Getriebe ausgebildet sein.

Gemäß einer bevorzugten Ausführungsform ist der Antriebsmotor des elektromotorischen Antriebs als Servo-Elektromotor ausgebildet. So kann auf einfache Weise eine Ermittlung und Kontrolle der Winkelposition der Motorwelle, der Drehgeschwindigkeit der Motorwelle und/oder der Beschleunigung der Motorwelle erfolgen.

Gemäß einer bevorzugten Ausführungsform ist der elektromotorische Antrieb Teil eines Roboters, insbesondere eines Delta-Roboters.

Nachfolgend wird die Erfindung anhand einer rein beispielhaften Ausführungsform unter Bezugnahme auf die beigefügten Zeichnungen beschrieben. Es zeigen:
- Fig. 1: Eine schematische Darstellung eines erfindungsgemäßen elektromotorischen Antriebs; und
- Fig. 2: eine schematische Darstellung eines Verfahrens zum Betreiben des elektromotorischen Antriebs aus Fig. 1.

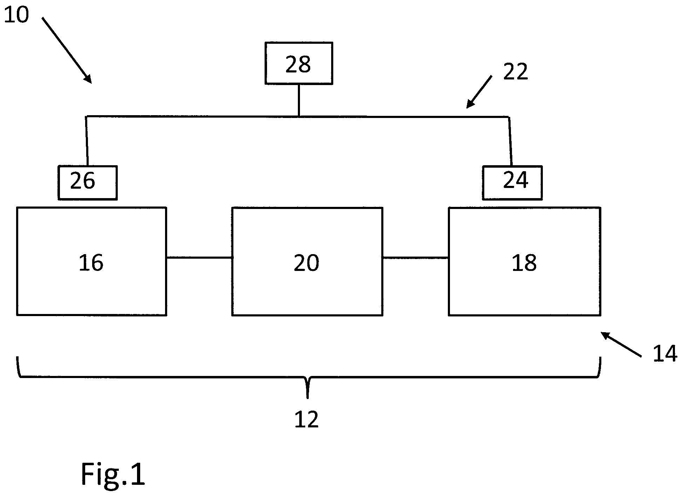

In Fig. 1 ist ein elektromotorischer Antrieb 10 eines nicht gezeigten Delta-Roboters dargestellt. Der elektromotorische Antrieb 10 verfügt über einen Antriebsstrang 12, an dessen motorfernem Ende 14 ein von einem Motor 16 antreibbares Antriebselement 18 angeordnet ist. Zwischen den Motor 16 und das Antriebselement 18 ist ein Getriebe 20 geschaltet, welches dazu ausgebildet ist, eine Antriebsdrehzahl des Motors 16 meist reduziert an das Antriebselement 18 zu übertragen und ein vom Motor 16 bereitgestelltes Drehmoment erhöht an das Antriebselement 18 weiterzuleiten.

Ferner ist eine Regelungseinrichtung 22 zur Regelung des am Antriebselement 18 anliegenden Drehmoments während eines Beschleunigungsvorgangs gezeigt. Die Regelungseinrichtung 22 umfasst eine Detektiereinrichtung 24 in Form einer Winkelbeschleunigungsmesseinrichtung, eine Steuerungseinrichtung 26 zur Steuerung der an dem Motor 16 angelegten Stromstärke und eine Speichereinheit 28, in der das Massenträgheitsmoment I_{MG} des Motors 16 und des Getriebes 20 gespeichert ist.

Zur Berechnung von Trägheitsverlusten beim Beschleunigen des Antriebsstrangs 12 misst die Detektiereinrichtung 24 die tatsächliche Beschleunigung a_{MG} des Antriebselements 18, des Getriebes 20 und/oder des Motors 16. Dieses wird dann mit dem in der Speichereinheit 28 gespeicherten Massenträgheitsmoment I_{MG} des Motors 16 und des Getriebes 20 multipliziert, um das aktuell durch Trägheitsverluste verursachte Verlustdrehmoment Tₗₒₛₛ zu berechnen. Dieses Verlustdrehmoment Tₗₒₛₛ wird dann von der Steuereinrichtung 26 auf ein zuvor definiertes maximales Drehmoment Tₛₜₐₜ zu einem neuen maximal zulässigen dynamischen Drehmomentsollwert T_{dyn} aufaddiert. Der Motor 16 kann dann mit einem dem neuen maximal zulässigen dynamischen Drehmomentsollwert T_{dyn} entsprechenden Drehmoment Tₜₒₜₐₗ angetrieben werden. In Echtzeit wird anschließend wieder die tatsächliche Beschleunigung a_{MG} gemessen und erneut ein aktuell von dem Motor 16 und dem Getriebe 20 erzeugtes Verlustdrehmoment Tₗₒₛₛ berechnet.

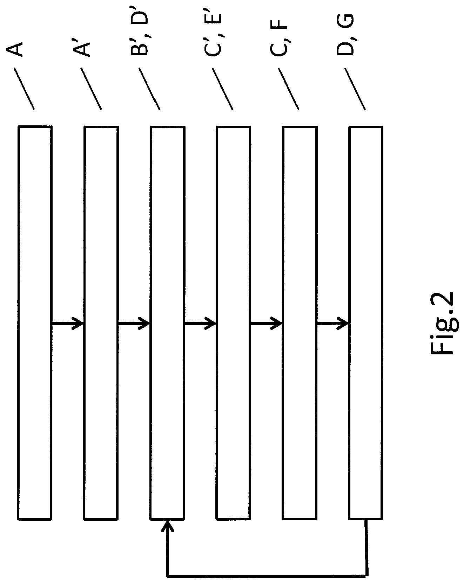

Fig. 2 stellt ein Verfahren zum Betreiben des elektromotorischen Antriebs aus Fig. 1 dar.

In einem ersten Schritt A wird ein maximal zulässiger stationärer Drehmomentsollwert Tₛₜₐₜ für das Antriebselement 18 bestimmt. Dieser Drehmomentsollwert Tₛₜₐₜ entspricht dem Drehmomentwert, mit welchem der Antriebsstrang im stationären Fall, das heißt ohne dass der Antriebsstrang 12 beschleunigt wird, maximal belastet werden kann, ohne Schaden zu nehmen.

In einem zweiten Schritt A' wird ein Trägheitsmoment I_{MG} der drehbaren Teile des Motors 16 und des Getriebes 20 ermittelt und in der Speichereinheit 28 hinterlegt. Schritt A' kann auch vor Schritt A durchgeführt werden.

Daraufhin wird der Motor 16 mit einem dem maximal zulässigen Drehmomentsollwert T_{dyn} entsprechenden Drehmoment Tₜₒₜₐₗ beschleunigt. Während des Beschleunigungsvorgangs erzeugen die rotierenden drehbaren Teile des Motors 16 und des Getriebes 20 ein durch Trägheitsverluste verursachtes Verlustdrehmoment Tₗₒₛₛ, welches auch als Beschleunigungsarbeit bezeichnet werden kann.

In den weiteren Schritten B' und C' wird dieses von dem Motor 16 und dem Getriebe 20 erzeugte Verlustdrehmoment Tₗₒₛₛ ermittelt. Hierzu wird in einem Schritt B' zuerst eine Beschleunigung a_{MG} der Motorwelle des Motors 16, eines der zum Getriebe 20 gehörenden rotierenden Teile oder des Antriebselements 18 gemessen. Beispielsweise wird die Beschleunigung a_{MG} anhand einer Winkelbeschleunigung eines der zuvor genannten rotierenden Teile des Antriebsstrangs 12 gemessen. Danach wird in einem Schritt C' ein Betrag des durch die Trägheitsmomente oder sonstiger Verluste der rotierenden Teile erzeugten Verlustdrehmoments Tₗₒₛₛ berechnet. Hierzu wird das in der Speichereinheit 28 abgespeicherte Trägheitsmoment I_{MG} des Antriebsstrangs 12 aufgerufen und mit der gemessenen Beschleunigung a_{MG} multipliziert.

Anschließend wird das berechnete Verlustdrehmoment Tₗₒₛₛ in einem Schritt C zu dem ursprünglich definierten maximal zulässigen nicht-dynamisch berechneten Drehmomentsollwert Tₛₜₐₜ addiert. Somit wird der maximale Drehmomentsollwert Tₛₜₐₜ gerade um den Drehmomentwert erhöht, welcher durch die bei der Beschleunigung des Antriebsstrangs 12 in diesem Moment erzeugten Drehmomentverluste Tₗₒₛₛ verbraucht wird. Der hierdurch berechnete neue maximale Drehmomentsollwert T_{dyn} wird dann der Steuerungseinrichtung 26 zur Verfügung gestellt, um den Motor 16 auf diesen neuen maximalen Drehmomentsollwert T_{dyn} zu begrenzen.

In einem Schritt D wird der Motor 16 mit einem dem neuen maximal zulässigen Drehmomentsollwert T_{dyn} entsprechenden dynamischen Drehmoment Tₜₒₜₐₗ beschleunigt.

Um eine konstante Nachführung des erlaubten maximalen Drehmoments während einer Beschleunigung des Antriebsstrangs zu erhalten, wird anschließend erneut im Schritt B'/D' die Beschleunigung a_{MG,neu} des Antriebsstrangs 12 gemessen. Danach wird erneut in einem Schritt C'/E' ein durch die Verluste erzeugtes Verlustdrehmoment T_{loss,neu} berechnet und in einem Schritt C/F ein weiterer neuer maximal zulässiger Drehmomentsollwert T_{dyn,neu} berechnet. Danach wird der Motor 16 erneut in einem Schritt D/G mit einem dem neuen maximal zulässigen Drehmomentsollwert T_{dyn,neu} entsprechenden Drehmoment T_{total,neu} beschleunigt.

Ziel des Verfahrens ist es, ein im Beschleunigungszeitraum durch Trägheits- und sonstige Verluste reduziertes Drehmoment am Antriebselement 18 zu vermeiden. Stattdessen kann mit Hilfe einer Ermittlung der momentanen Trägheits- und sonstigen Verluste und einer entsprechenden Verstärkung des Drehmoments während eines Beschleunigungsvorgangs das Drehmoment am Antriebselement 18 unabhängig von den Verlusten auf einem konstanten, maximal zulässigen Wert gehalten werden.

### Bezugszeichenliste

- 10: Elektromotorischer Antrieb
- 12: Antriebsstrang
- 14: motorfernes Ende
- 16: Motor
- 18: Antriebselement
- 20: Getriebe
- 22: Regelungseinrichtung
- 24: Verlustdrehmomentermittlungseinrichtung
- 26: Steuerungseinrichtung
- 28: Speichereinheit

## Patentansprüche

1. Verfahren zum Betreiben eines Antriebsmotors (16) eines Roboterarms mit einem maximalen dynamischen Drehmoment, umfassend die folgenden Schritte:
(A) Definieren eines maximal zulässigen Drehmomentsollwerts Tₛₜₐₜ eines Antriebselements (18),
(B) Ermitteln eines Betrags eines durch Trägheits- und/oder sonstige Verluste verursachten Verlustdrehmoments Tₗₒₛₛ des Antriebsstrangs (12),
(C) Ermitteln eines neuen maximal zulässigen Drehmomentsollwerts T_{dyn} durch ein Erhöhen des maximal zulässigen Drehmomentsollwerts Tₛₜₐₜ in Abhängigkeit von dem Betrag des Verlustdrehmoments Tₗₒₛₛ, und
(D) Beschleunigen des Antriebsmotors (16) mit einem durch den neuen maximal zulässigen Drehmomentsollwert T_{dyn} begrenzten dynamischen Drehmoment Tₜₒₜₐₗ.

2. Verfahren zum Betreiben eines Antriebsmotors (16) eines Roboterarms mit einem maximalen dynamischen Drehmoment nach Anspruch 1, umfassend die folgenden Schritte:
(A') Hinterlegen eines Trägheitsmoments I_{MG} der im Antriebsstrang (12) bewegten Teile,
(B') Ermitteln der Beschleunigung a_{MG} des Antriebsstrangs (12),
(C') Berechnen des Betrags des durch Trägheitsverluste verursachten Verlustdrehmoments Tₗₒₛₛ des Antriebsstrangs (12) durch Multiplikation des Trägheitsmoments I_{MG} des Antriebsstrangs (12) mit der ermittelten Beschleunigung a_{MG} des Antriebsstrangs (12).

3. Verfahren zum Betreiben eines Antriebsmotors (16) eines Roboterarms mit einem maximalen dynamischen Drehmoment nach Anspruch 1 oder 2, umfassend die folgenden Schritte:
(E) Ermitteln eines Betrags eines durch Trägheits- und/oder sonstigen Verlusten verursachten neuen Verlustdrehmoments T_{loss,neu} des Antriebsstrangs (12),
(F) Ermitteln eines neuen maximal zulässigen Drehmoments T_{dyn,neu} durch ein Erhöhen des maximal zulässigen Drehmomentsollwerts Tₛₜₐₜ in Abhängigkeit von dem Betrag des Verlustdrehmoments T_{loss,neu}, und
(G) Beschleunigen des Antriebsmotors (16) mit einem durch das neue maximal zulässige Drehmoment T_{dyn,neu} begrenzten dynamischen Drehmoment T_{total,neu}.

4. Verfahren zum Betreiben eines Antriebsmotors (16) eines Roboterarms mit einem maximalen dynamischen Drehmoment nach Anspruch 2 und 3, umfassend die folgenden Schritte:
(D') Ermitteln einer neuen Beschleunigung a_{MG,neu} des Antriebsstrangs (12),
(E') Berechnen des Betrags des neuen Verlustdrehmoments T_{loss,neu} des Antriebsstrangs (12) durch Multiplikation des Trägheitsmoments I_{MG} des Antriebsstrangs mit der ermittelten neuen Beschleunigung a_{MG,neu} des Antriebsstrangs (12).

5. Verfahren zum Betreiben eines Antriebsmotors (16) eines Roboterarms mit einem maximalen dynamischen Drehmoment nach zumindest einem der vorhergehenden Ansprüche, wobei
der Antriebsmotor (16) ein Elektromotor, insbesondere ein Servo-Elektromotor, ist und insbesondere das Beschleunigen des Antriebsmotors (16) mit dem neuen maximal zulässigen Drehmoment T_{dyn} durch ein Erhöhen einer am Antriebsmotor (16) bereitgestellten abhängig vom Verlustdrehmoment Tₗₒₛₛ bestimmten Stromstärke bewirkt wird.

6. Verfahren zum Betreiben eines Antriebsmotors (16) eines Roboterarms mit einem maximalen dynamischen Drehmoment nach zumindest einem der vorhergehenden Ansprüche, wobei
das Ermitteln oder Berechnen des neuen maximal zulässigen Drehmomentsollwerts T_{dyn} in Echtzeit vorgenommen wird.

7. Elektromotorischer Antrieb (10) eingerichtet für einen Roboter, umfassend
einen Antriebsstrang (12) mit einem mit einem maximal zulässigen Drehmoment Tₛₜₐₜ antreibbaren Antriebselement (18),
**gekennzeichnet durch**
eine Regelungseinrichtung (22) mit
einer Verlustdrehmomentermittlungseinrichtung (24) eingerichtet zum Ermitteln eines durch Trägheitsverluste verursachten Verlustdrehmoments Tₗₒₛₛ des Antriebsstrangs (12),
und
einer Steuerungseinrichtung (26) eingerichtet zum Erhöhen des zulässigen Drehmomentsollwerts T_{dyn} über das maximal zulässige Drehmoment Tₛₜₐₜ hinaus in Abhängigkeit von dem Verlustdrehmoment Tₗₒₛₛ.

8. Elektromotorischer Antrieb nach Anspruch 7,
**dadurch gekennzeichnet, dass**
die Verlustdrehmomentermittlungseinrichtung (24) eine Beschleunigungsmesseinrichtung umfasst, welche insbesondere als Winkelbeschleunigungsmesseinrichtung ausgebildet ist.

9. Elektromotorischer Antrieb nach Anspruch 7,
**dadurch gekennzeichnet, dass**
die Verlustdrehmomentermittlungseinrichtung (24) eine Geschwindigkeitsmesseinrichtung umfasst, welche insbesondere als Winkelgeschwindigkeitsmesseinrichtung ausgebildet ist.

10. Elektromotorischer Antrieb nach Anspruch 7,
**dadurch gekennzeichnet, dass**
die Verlustdrehmomentermittlungseinrichtung (24) eine Positionsmesseinrichtung umfasst, welche insbesondere als Winkelpositionsmesseinrichtung ausgebildet ist.

11. Elektromotorischer Antrieb nach einem der Ansprüche 7 bis 10,
**dadurch gekennzeichnet , dass**
die Regelungseinrichtung eine Speichereinheit (28) umfasst, in der ein Trägheitsmoment I_{MG} des Antriebsstrangs (12) abgespeichert ist.

12. Roboter, insbesondere Delta-Roboter, mit einem elektromotorischen Antrieb (10) nach zumindest einem der vorstehenden Ansprüche 7 bis 11.

## Claims

1. A method of operating a drive motor (16) of a robot arm with a maximum dynamic torque, comprising the following steps:
(A) defining a maximum permissible desired torque value Tₛₜₐₜ of a drive element (18),
(B) determining an amount of a loss torque Tₗₒₛₛ of the drive train (12) caused by inertial losses and/or other losses,
(C) determining a new maximum permissible desired torque value T_{dyn} by increasing the maximum permissible desired torque value Tₛₜₐₜ in dependence on the amount of the loss torque Tₗₒₛₛ, and
(D) accelerating the drive motor (16) with a dynamic torque Tₜₒₜₐₗ limited by the new maximum permissible desired torque value T_{dyn}.

2. A method of operating a drive motor (16) of a robot arm with a maximum dynamic torque according to claim 1, comprising the following steps:
(A') storing a moment of inertia I_{MG} of the parts moving in the drive train (12),
(B') determining the acceleration a_{MG} of the drive train (12),
(C') calculating the amount of the loss torque Tₗₒₛₛ of the drive train (12) caused by inertial losses by multiplying the moment of inertia I_{MG} of the drive train (12) by the determined acceleration a_{MG} of the drive train (12).

3. A method of operating a drive motor (16) of a robot arm with a maximum dynamic torque according to claim 1 or 2, comprising the following steps:
(E) determining an amount of a new loss torque T_{loss,new} of the drive train (12) caused by inertial losses and/or other losses,
(F) determining a new maximum permissible torque T_{dyn,new} by increasing the maximum permissible desired torque value Tₛₜₐₜ in dependence on the amount of the loss torque T_{loss,new}, and
(G) accelerating the drive motor (16) with a dynamic torque T_{total,new} limited by the new maximum permissible torque T_{dyn,new}.

4. A method of operating a drive motor (16) of a robot arm with a maximum dynamic torque according to claims 2 and 3, comprising the following steps:
(D') determining a new acceleration a_{MG,new} of the drive train (12),
(E') calculating the amount of the new loss torque T_{loss,new} of the drive train (12) by multiplying the moment of inertia I_{MG} of the drive train by the determined new acceleration a_{MG,new} of the drive train (12).

5. A method of operating a drive motor (16) of a robot arm with a maximum dynamic torque according to at least one of the preceding claims, wherein the drive motor (16) is an electric motor, in particular a servo-electric motor, and in particular the acceleration of the drive motor (16) with the new maximum permissible torque T_{dyn} is effected by increasing a current intensity which is provided at the drive motor (16) and which is determined in dependence on the loss torque Tₗₒₛₛ.

6. A method of operating a drive motor (16) of a robot arm with a maximum dynamic torque according to at least one of the preceding claims, wherein the determination or calculation of the new maximum permissible desired torque value T_{dyn} is performed in real time.

7. An electric motor drive (10) configured for a robot, comprising
a drive train (12) having a drive element (18) that can be driven with a maximum permissible torque Tₛₜₐₜ,
**characterized by**
a regulation device (22) having
a loss torque determination device (24) configured for determining a loss torque Tₗₒₛₛ of the drive train (12) caused by inertial losses,
and
a control device (26) configured for increasing the permissible desired torque value T_{dyn} beyond the maximum permissible torque Tₛₜₐₜ in dependence on the loss torque Tₗₒₛₛ.

8. An electric motor drive according to claim 7,
**characterized in that**
the loss torque determination device (24) comprises an acceleration measurement device which is in particular configured as an angular acceleration measurement device.

9. An electric motor drive according to claim 7,
**characterized in that**
the loss torque determination device (24) comprises a speed measurement device which is in particular configured as an angular speed measurement device.

10. An electric motor drive according to claim 7,
**characterized in that**
the loss torque determination device (24) comprises a position measurement device which is in particular configured as an angular position measurement device.

11. An electric motor drive according to any one of the claims 7 to 10,
**characterized in that**
the regulation device comprises a memory unit (28) in which a moment of inertia I_{MG} of the drive train (12) is stored.

12. A robot, in particular a delta robot, comprising an electric motor drive (10) according to at least one of the preceding claims 7 to 11.

## Revendications

1. Procédé pour faire fonctionner un moteur d'entraînement (16) d'un bras de robot avec un couple dynamique maximal, comprenant les étapes suivantes consistant à :
(A) définir une valeur de consigne de couple maximale admissible Tₛₜₐₜ d'un élément d'entraînement (18),
(B) déterminer une valeur d'un couple de perte Tₗₒₛₛ de la chaîne cinématique (12) causé par des pertes d'inertie et/ou d'autres pertes,
(C) déterminer une nouvelle valeur de consigne de couple maximale admissible T_{dyn} en augmentant la valeur de consigne de couple maximale admissible Tₛₜₐₜ en fonction de la valeur du couple de perte Tₗₒₛₛ, et
(D) accélérer le moteur d'entraînement (16) avec un couple dynamique Tₜₒₜₐₗ limité par la nouvelle valeur de consigne de couple maximale admissible T_{dyn}.

2. Procédé pour faire fonctionner un moteur d'entraînement (16) d'un bras de robot avec un couple dynamique maximal selon la revendication 1, comprenant les étapes suivantes consistant à :
(A') enregistrer un moment d'inertie I_{MG} des pièces en mouvement dans la chaîne cinématique (12),
(B') déterminer l'accélération a_{MG} de la chaîne cinématique (12),
(C) calculer la valeur du couple de perte Tₗₒₛₛ de la chaîne cinématique (12), causé par les pertes d'inertie, en multipliant le couple d'inertie I_{MG} de la chaîne cinématique (12) par l'accélération déterminée a_{MG} de la chaîne cinématique (12).

3. Procédé pour faire fonctionner un moteur d'entraînement (16) d'un bras de robot avec un couple dynamique maximal selon la revendication 1 ou 2, comprenant les étapes suivantes consistant à :
(E) déterminer une valeur d'un nouveau couple de perte T_{loss, nouveau} de la chaîne cinématique (12) causé par des pertes d'inertie et/ou d'autres pertes,
(F) déterminer un nouveau couple maximal admissible T_{dyn}, ₙₒᵤᵥₑₐᵤ en augmentant la valeur de consigne de couple maximale admissible Tₛₜₐₜ en fonction de la valeur du couple de perte T_{loss, nouveau}, et
(G) accélérer le moteur d'entraînement (16) avec un couple dynamique T_{total. nouveau} limité par le nouveau couple maximal admissible T_{dyn, nouveau}.

4. Procédé pour faire fonctionner un moteur d'entraînement (16) d'un bras de robot avec un couple dynamique maximal selon les revendications 2 et 3, comprenant les étapes suivantes consistant à :
(D') déterminer une nouvelle accélération a_{MG, nouvelle} de la chaîne cinématique (12),
(E') calculer la valeur du nouveau couple de perte T_{loss, nouveau} de la chaîne cinématique (12) en multipliant le moment d'inertie I_{MG} de la chaîne cinématique par la nouvelle accélération déterminée a_{MG, nouvelle} de la chaîne cinématique (12).

5. Procédé pour faire fonctionner un moteur d'entraînement (16) d'un bras de robot avec un couple dynamique maximal selon l'une au moins des revendications précédentes, dans lequel
le moteur d'entraînement (16) est un moteur électrique, en particulier un servomoteur électrique, et en particulier l'accélération du moteur d'entraînement (16) avec le nouveau couple maximal admissible T_{dyn} est provoquée par une augmentation d'une intensité de courant fournie au moteur d'entraînement (16) et définie en fonction du couple de perte Tₗₒₛₛ.

6. Procédé pour faire fonctionner un moteur d'entraînement (16) d'un bras de robot avec un couple dynamique maximal selon l'une au moins des revendications précédentes, dans lequel
la détermination ou le calcul de la nouvelle valeur de consigne de couple maximale admissible T_{dyn} est effectué(e) en temps réel.

7. Entraînement à moteur électrique (10), conçu pour un robot, comprenant
une chaîne cinématique (12) avec un élément d'entraînement (18) pouvant être entraîné avec un couple maximal admissible Tₛₜₐₜ,
**caractérisé par**
un dispositif de régulation (22) avec un dispositif de détermination du couple de perte (24) conçu pour déterminer un couple de perte Tₗₒₛₛ de la chaîne cinématique (12) causé par des pertes d'inertie,
et
un dispositif de commande (26) conçu pour augmenter la valeur de consigne de couple admissible T_{dyn} au-delà du couple maximal admissible Tₛₜₐₜ en fonction du couple de perte Tₗₒₛₛ.

8. Entraînement à moteur électrique selon la revendication 7,
**caractérisé en ce que**
le dispositif de détermination du couple de perte (24) comprend un dispositif de mesure de l'accélération, qui est conçu en particulier comme un dispositif de mesure de l'accélération angulaire.

9. Entraînement à moteur électrique selon la revendication 7,
**caractérisé en ce que**
le dispositif de détermination du couple de perte (24) comprend un dispositif de mesure de la vitesse, qui est conçu en particulier comme un dispositif de mesure de la vitesse angulaire.

10. Entraînement à moteur électrique selon la revendication 7,
**caractérisé en ce que**
le dispositif de détermination du couple de perte (24) comprend un dispositif de mesure de la position, qui est conçu en particulier comme un dispositif de mesure de la position angulaire.

11. Entraînement à moteur électrique selon l'une des revendications 7 à 10,
**caractérisé en ce que**
le dispositif de régulation comprend une unité de mémoire (28) dans laquelle est mémorisé un moment d'inertie I_{MG} de la chaîne cinématique (12).

12. Robot, en particulier robot delta, comportant un entraînement à moteur électrique (10) selon l'une au moins des revendications précédentes 7 à 11.
